Europäisches Patentamt

(19) European Patent Office

Office européen des brevets

(11) Publication number: **0 246 333 B1**

(12) **EUROPEAN PATENT SPECIFICATION**

(45) Date of publication of patent specification:
02.05.91 Bulletin 91/18

(21) Application number: **86906930.2**

(22) Date of filing: **17.11.86**

(86) International application number:
**PCT/JP86/00584**

(87) International publication number:
**WO 87/03232 04.06.87 Gazette 87/12**

(51) Int. Cl.⁵: **B23H 7/06, B23H 7/04**

(54) **ELECTRIC DISCHARGE WIRE CUTTING METHODS AND APPARATUS THEREFOR.**

(30) Priority: **20.11.85 JP 258744/85**

(43) Date of publication of application:
**25.11.87 Bulletin 87/48**

(45) Publication of the grant of the patent:
**02.05.91 Bulletin 91/18**

(84) Designated Contracting States:
**CH DE FR GB LI**

(56) References cited:
**JP-A-56 500 405**
**JP-A-61 288 929**
**No relevant documents have been disclosed.**

(73) Proprietor: **FANUC LTD.**
**3580, Shibokusa Aza-Komanba, Oshino-mura**
**Minamitsuru-gun, Yamanashi 401-05 (JP)**

(72) Inventor: **OBARA, Haruki**
**844-7, Hashimoto**
**Sagamihara-shi Kanagawa 229 (JP)**

(74) Representative: **Brunner, Michael John et al**
**GILL JENNINGS & EVERY 53-64 Chancery**
**Lane**
**London WC2A 1HN (GB)**

## Description

This invention relates to a method for wire electrode type electrical discharge machining and an equipment employable for wire electrode type electrical discharge machining. More specifically, this invention relates to an improvement applicable to a method for wire electrode type electrical discharge machining in which the angle between the direction in which a wire electrode extends and the direction along the surface of a work varies (hereinafter referred to as taper machining), for the purpose to improve the machining accuracy thereof and to an improvement applicable to an equipment employable for wire electrode type electrical discharge machining, for the purpose to enable the above mentioned improved method to be conducted therewith.

Wire electrode type electrical discharge machining which is conducted by employing an equipment for wire electrode type electrical discharge machining is classified into two categories including an ordinary machining in which the direction of a wire electrode is maintained to be perpendicular to the direction in which a work is moved and a so-called taper machining in which the angle between the direction of a wire electrode and the direction perpendicular to the direction in which a work moves (an angle by which a wire electrode inclines or a taper angle) is maintained at an angle which is not zero degrees or is intentionally varied.

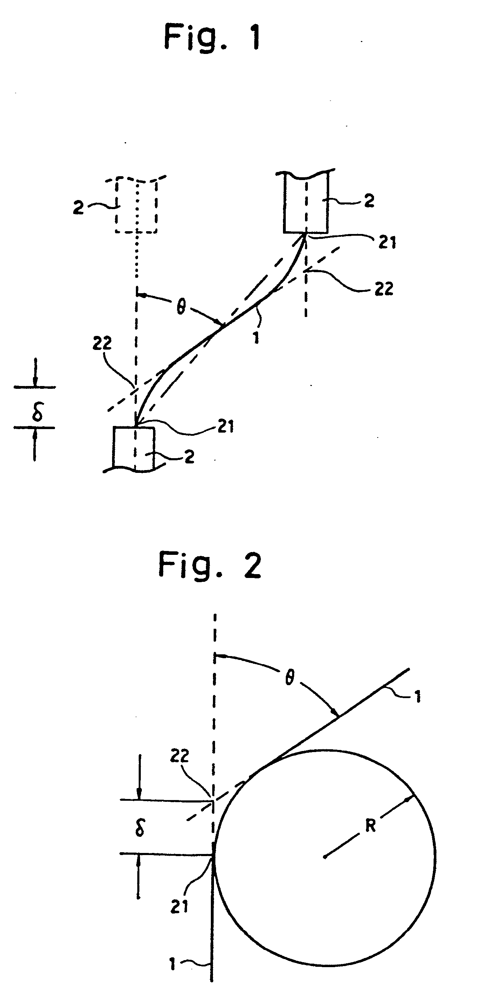

Referring to Fig. 1, taper machining can be conducted by relatively moving the upper and lower electrode guides 2 from side to side as shown in the drawing, thereby the angle between the direction in which a wire electrode 1 extends in the cases where the upper and lower electrode guides 2 are superposed each other (as shown by dotted lines in the drawing) and the current direction in which the wire electrode 1 actually extends, is controlled. If this taper angle could be a sharp angle, a taper machining can readily be realized by a servomechanism. Since a wire electrode 1 is elastic, however, the wire electrode 1 does not extend in a straight line but in a gradually curved line between the upper and lower electrode guides 2. In other words, the wire electrode does not extend as shown by a chain line shown in Fig. 1 but in a solid line shown in Fig. 1.

Since taper machining is conducted exclusively by relatively moving the upper and lower electrode guides 2 from side to side in the drawing, it is essential to remove an error caused by the aforementioned curvature in the extended shape of the wire electrode 1. To remove this error, the reference joint of the upper and lower electrode guides 2 must be corrected from the end point 21 to the point 22 (the cross point at which a current direction in which a wire electrode actually extends, crosses a direction in which the wire electrode 1 extends in the case where the upper and lower wire guides 2 are superposed to each other as shown by a dotted line in Fig. 1). This correction is called a positional correction of the supporting point of a machining electrode.

The amount of correction δ by which the wire electrode guide supporting points are shifted is a constant, provided the elastisity of the wire electrode is constant.

However, when the direction in which a wire electrode proceeds along a table during a machining process is changed to make a turn during a taper machining process, (or when a X-Y axis control system changes its direction at a corner during a taper machining process,) the machining current is required to be decreased. Otherwise, the pressure caused by an electric spark discharge causes the radius of curvature to become large at the corner, resultantly causing the machining error (the error in the finished shape) to become large at the corner.

Therefore, when the direction in which a wire electrode proceeds along a table during a machining process is changed to make a turn during a taper machining process, (or when a X-Y axis control system changes its direction at a corner during a taper machining process,) a combined correction is required wherein the positional correction of the supporting points of machining electrode guides and a change in the machining current, are combined. Otherwise, a good level of the machining accuracy can not be expected. This is because a decrease in the machining current which is intentionally applied during a corner-machining in which the direction in which a wire electrode proceeds along a table is changed to make a turn during a machining process, causes a decrease in heat emission in the wire electrode, resultantly decreasing the rigidity of the wire electrode and changing the required amount of the positional correction.

The positional correction of the supporting points of a machining electrode can be realized by employing a method disclosed in an international patent application No. PCT/JP86/00054 filed by the applicant of this application in Japanese Patent Office as a receiving office. However, the method consists of a plurality of fairly complicated ingredients. Particulary from practical viewpoints, it is not necessarily easy to frequently change a correction amount of the positional correction.

An object of this invention is to provide a method for wire electrode type electrical discharge machining, wherein a potential increase in the machining error (an error in the finished shape) is prevented from occurring and the accuracy in machining is improved, during a machining process in which a taper machining and a corner machining in which the direction in which a wire electrode proceeds along a table is changed at a corner by changing the direction of a X-Y axis control system, are combined. An additional object of this invention is to provide an equipment employable for wire electrode type electrical discharge machining, wherein a potential increase in the machining error (an error in the finished shape) is prevented from occurring and the accuracy in machining is improved, during a machining process in which a taper machining and a corner machining in which the direction in which a wire electrode proceeds along a table is changed at a corner by changing the direction of a X-Y axis control system, are combined.

To achieve the first of the above objects, a method for wire electrode type electrical discharge machining in accordance with this invention comprises :

(a) a combined step in which the tension to be applied to a wire electrode is decreased and the machining current is decreased,

(b) such a combined step being conducted, during a machining process in which a taper machining and a corner machining (in which the direction in which a wire electrode proceeds along a table is changed at a corner by changing the direction of a X-Y axis control system) are combined.

This invention is based on the principle described below.

Referring to Fig. 2, the correction amount $\delta$ by which wire electrode guide supporting points are shifted, is represented by the following formulae. In the case where $\theta$ is less than $\theta_0$,

$$\delta = \frac{1}{K \cos \theta_0}$$

In the case where $\theta$ is larger than $\theta_0$,

$$\delta = \frac{R}{\sin \theta} \{\cos \theta_0 - \cos \theta + \frac{1}{K^2 R^2}\}$$

wherein :

R is the radius of curvature of the assumed surface of a machining electrode guide along which a wire electrode 1 contacts the machining electrode guide,

$\theta$ is an angle for which the wire electrode 1 remains in contact with the machining electrode guide, and

$\theta_0$ is the maximum angle for which the wire electrode 1 keeps contact with the machining electrode guide. K is a proportion constant which is represented by

$$K^2 = T \times (64^{-1} \times \pi \times d^4 \times E)^{-1}$$

wherein :

d is the diameter of the wire electrode,

E is Young's modulus of the wire electrode, and

T is the tension applied to the wire electrode.

The above formulae can be interpreted that any change in Young's modulus of the wire electrode causes no corresponding change for the correction amount $\delta$ of the positional correction of wire electrode guide supporting points, if the tension T which is applied to a wire electrode is changed following a change in Young's modulus of the wire electrode. In other words, the above formulae can be interpreted that a control of the correction amount $\delta$ of the positional correction of wire electrode guide supporting points, following a change in Young's modulus of the wire electrode can be replaced by a control of the tension T which is applied to the wire electrode. This invention is based on this principle.

A method for wire electrode type electrical discharge machining in accordance with this invention can be restated :

A method for wire electrode type electrical discharge machining comprising :

(a) a step to control the tension applied to a wire electrode in proportion to a change in Young's modulus of the wire electrode, and a step to decrease the electric current supplied to the wire electrode,

(b) such steps being taken, when a corner machining and a taper machining are conducted in combination, or when the direction in which a wire electrode proceeds along the surface of a table (more practically, along the surface of a work) is changed at a corner, while a taper machining is conducted.

Since a change in Young's modulus of a wire electrode is caused by heat caused by machining electric current flowing in the wire electrode, the change in Young's modulus of the wire electrode can be sensed by monitoring the machining electric current. Accordingly, if the relations between a machining electric current and a tension optimum to the machining electric current are known, the above machining process in accordance with this invention can be realized by monitoring the machining electric current during a machining process, and by applying a tension which is determined to be optimum based on the monitored machining electric current and the above relations.

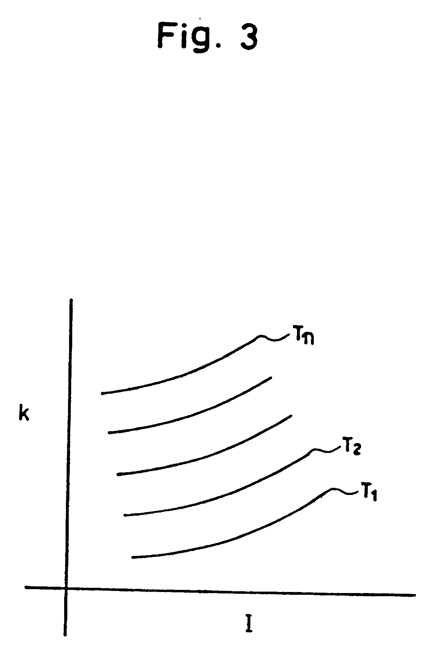

Further description will be presented below for the steps of this invention. When a wire electrode type electrical discharge machining equipment is given, experiments are conducted to determine the relations between the machining current 1 and the above mentioned proportion constant K, using the tension as a parameter, before the information corresponding to the graph shown in Fig. 3 is obtained. Then, a change in the tension T which is required following a change in the machining current and which is sufficient to keep the above mentioned proportion constant K unchanged, is determined.

During a taper machining, a tension T which is applied to the wire electrode is controlled, following the above determined information, in addition to a control to decrease the electric current 1 to be supplied to the wire electrode, whenever the direction in which the wire electrode proceeds along a table (more practically along the surface of a work) is changed.

If the above process is implemented, a change in the correction amount δ for the positional correction of wire electrode guide suporting points is caused unnecessary, even in the cases where a change in the Young's modulus of a wire electrode happens due to a change in the rigidity of the wire electrode caused by a change in the machining current and the resultant change in the heat caused by the machining current. As a result, an accurate machining becomes possible for taper machining also at a corner where a wire electrode changes its direction of progress along the surface of a table (more specifically along the surface of a work), where a decrease of machining current is essential.

Further, to achieve the second of the above objects, an equipment for wire electrode type electrical discharge machining in accordance with this invention is provided a means for a taper machining and a means for controlling the machining current, while a corner machining is conducted, the equipment being further provided :

(a) a memory means (91) for memorizing the information indicating the relations between the machining current and the amount of tension which is optimum to the machining current,

(b) a monitor means (12) for monitoring the electric discharge machining current,

(c) an optimum tension calculation means (93) for calculating the tension optimum to the monitored machining current monitored with said monitor means (12), and

(d) a tension control means (92) for controlling the tension of the wire electrode (1), in response to the above calculated optimum tension given by the optimum tension calculation means (93).

Fig. 1 is a drawing for illustrating the drawback of a prior art,

Fig. 2 is a drawing illustrating the function of this invention,

Fig. 3 is a graph employed for implementing the wire electrode type electrical discharge machining in accordance with this invention (or a graph illustrating the relations between the electric discharge machining current 1 and the proportion constant referred to above), and

Fig. 4 is a schematic drawing of an equipment. for wire electrode type electrical discharge machining in accordance with one embodiment of this invention.

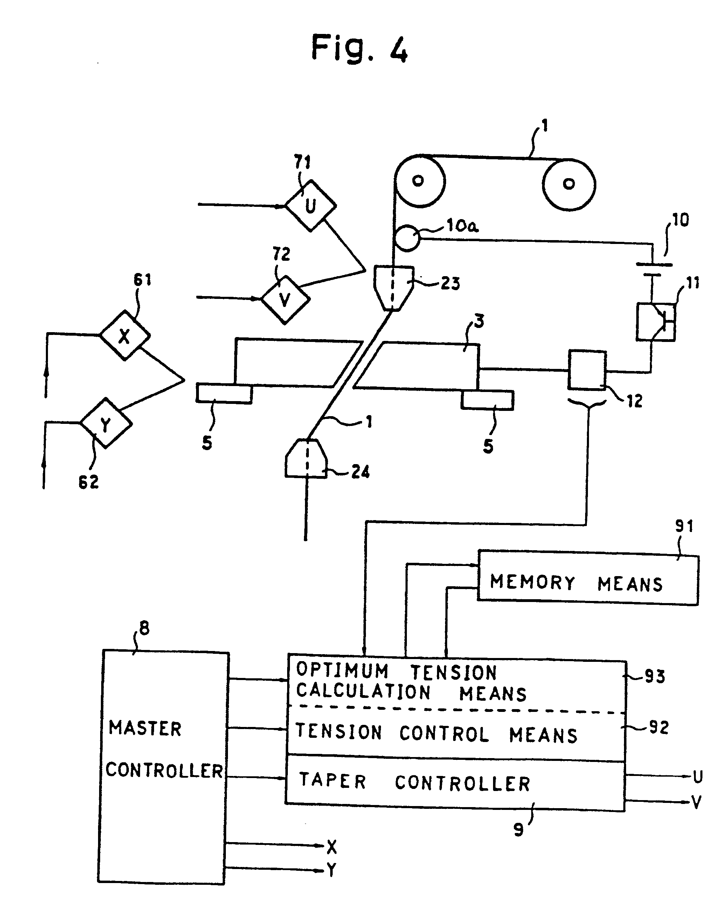

Referring to Fig. 4, a wire electrode 1 is guided by upper and lower wire electrode guides 23 & 24. The upper guide 23 is supported by an upper arm (not shown), and the lower guide 24 is supported by a lower arm (not shown). The wire electrode 1 is supported with tension between these two arms. A work 3 is placed on a table 5 arranged between the upper and lower arms movably in the X-Y direction. An X-Y axis servomechanism 61 & 62 drives the table 5 in the X-Y direction. A U-V axis servomechanism 71 & 72 drives the upper wire guide 23 to change the relative position of the upper and lower wire electrode guides 23 and 24 to implement a taper machining. Although a taper machining can be implemented by relatively moving either the upper guide 23 or the lower guide 24, the upper guide 23 is moved in this embodiment.

A master controller 8 commands the equipment for wire electrode type electrical discharge machining, covering the control of the X-Y axis servomechanism 61 & 62 and the control to decrease the machining current for a corner machining. A taper controller 9 controlls the U-V axis servomechanism 71 & 72. These functions can be readily realized by employing software based on a computer.

A DC power supply 10 of which the one terminal is connected with the wire electrode 1 through an electric current feeder roller 10a, and of which the other terminal is connected with the work 3 through an intermittent switch means 11 and a machining electric current monitor 12, is intermittently disconnected from the wire electrode 1 by the intermittent switch means 11 resultantly supplying a machining gap which is formed between the wire electrode 1 and the work 3 with a pulsative electric current. As was described above, the machining current is decreased, whenever a corner machining is conducted. This control is conducted also during a period in which a taper machining is conducted.

A memory means 91 memorizes the information indicating the relations between the machining current and the amount of tension which is optimum to the machining current. An optimum tension calculation means (93), in response to the electric current monitored by a monitor means (12) for monitoring the electric discharge machining current, retrieves the optimum tension from the memory means 91 or calculates the optimum tension based on the information retrieved from the memory means 91. A tension control means 92 controls a servomechanism to realise the optimum tension on the wire electrode 1.

The above control can readily be realized by employing a computer which an equipment for wire electrode type electrical discharge machining is properly provided with.

The foregoing description has clarified that this invention has successfully provided a method for wire electrode type electrical discharge machining, wherein a potential increase in the machining error (an error in the finished shape) is prevented from occurring and the accuracy in machining is improved, during a machining process in which a taper machining and a corner machining are combined, and an equipment employable for wire electrode type electrical discharge machining, wherein a potential increase in the machining error (an error in the finished shape) is prevented from occurring and the accuracy in machining is improved, during a machining process in which a taper machining and a corner machining are combined.

**Claims**

1. A method for wire electrode type electrical discharge machining, wherein the angle θ between the direction in which a wire electrode (1) extends and a work (3) is allowed to be changed, comprising :

a step to control the tension to be applied to said wire electrode (1) in proportion to a change in Young's modulus of said wire electrode (1), and a step to decrease the electric current supplied to said wire electrode (1), such steps being taken, whenever the direction in which said wire electrode (1) proceeds along the surface of a work (3), is changed at a corner, while a taper machining is conducted.

2. A method for wire electrode type electrical discharge machining in accordance with Claim 1, wherein said change in Young's modulus of said wire electrode (1) is sensed by monitoring the electric current flowing in said wire electrode (1).

3. An equipment for wire electrode type electrical discharge machining, the equipment allowing to change the angle θ between the direction in which a wire electrode (1) extends and a work, comprising :

a memory means (91) for memorizing the information indicating the relations between the machining current and the amount of tension which is optimum to the machining current, a monitor means (12) for monitoring the electric discharge machining current, an optimum tension calculation means (93) for calculating the optimum tension to the machining current monitored with said monitor means (12), and a tension control means (92) for controlling the tension of said wire electrode (1) in response to the above calculated optimum tension given by said optimum tension calculation means (93).

**Ansprüche**

1. Verfahren zur elektrischen Funkenerosion mit Drahtelektroden, bei dem der Winkel θ zwischen der Richtung, in welcher sich die Drahtelektrode (1) erstreckt und einem Werkstück veränderbar ist, umfassend :

einen Schritt, um die an die Drahtelektrode (1) anzulegende Spannung im Verhältnis zu einer Veränderung im Elastizitätsmodul der Drahtelektrode (1) zu steuern und einen Schritt, um den der Drahtelektrode (1) zugeführten Strom zu verringern, wobei diese Schritte durchgeführt werden, wann immer die Richtung, in welcher die Drahtelektrode (1) entlang der Werkstückoberfläche verläuft, an einer Ecke geändert wird, während eine Schrägbearbeitung durchgeführt wird.

2. Verfahren zur elektrischen Funkenerosion mit Drahtelektroden nach Anspruch 1, dadurch gekennzeichnet, daß die Veränderung des Elastizitätsmoduls der Drahtelektrode (1) durch Überwachung des in der Drahtelektrode fließenden Stromes festgestellt wird.

3. Vorrichtung zur elektrischen Funkenerosion mit Drahtelektroden, die eine Veränderung des Winkels θ zwischen der Richtung, in welcher sich die Drahtelektrode (1) erstreckt und einem Werkstück (3) ermöglicht, umfassend :

einen Speicher (91) zur Speicherung der Information, welche die Verhältnisse zwischen dem Bearbeitungsstrom und der Spannungsgröße, die ein Optimum zum Bearbeitungsstrom ist, angibt, einer Überwachungseinrichtung (12) zur Überwachung des Elektroerosions-Bearbeitungsstromes, einen Optimalspannungs-Rechner (93) zur Berechnung der Optimalspannung zum Bearbeitungsstrom, der mit der Überwachungseinrichtung (12) überwacht wird, und einen Spannungsregler (92) zur Regelung der Spannung der Drahtelektrode (1) in Abhängigkeit von der berechneten Optimalspannung, die durch den Optimalspannungsrechner (93) gegeben wird.

**Revendications**

1. Procédé d'usinage par étincelage, du type à fil-électrode, selon lequel l'angle θ existant entre la direction suivant laquelle le fil-électrode (1) s'étend et la pièce (3) est autorisé à varier, comprenant :

une opération consistant à régler la tension à appliquer sur le fil-électrode (1) d'une manière proportionnelle à la variation du module de Young de ce fil-électrode (1) et une opération consistant à réduire le courant électrique fourni à ce fil-électrode (1), ces opérations étant effectuées chaque fois que la direction suivant laquelle le fil-électrode (1) se déplace le long de la surface de la pièce (3) change à l'endroit d'un coin, tandis qu'un usinage en biais est exécuté.

2. Procédé d'usinage par étincelage du type à fil-électrode suivant la revendication 1, dans lequel on détecte la variation du module de Young de fil-électrode (1) en surveillant le courant électrique qui traverse ce fil-électrode (1).

3. Appareillage d'usinage par étincelage, du type à filélectrode, permettant de faire varier l'angle θ existant entre la direction suivant laquelle le fil-électrode (1) s'étend et la pièce, comprenant :

une mémoire (91) permettant de stocker les informations indiquant les relations existant entre le courant d'usinage et la valeur de tension qui est optimale pour ce courant d'usinage,
des moyens de surveillance (12) permettant de surveiller le courant d'étincelage,
des moyens de calcul de tension optimale (93) permettant de calculer la tension optimale pour le courant d'usinage surveillé à l'aide des moyens de surveillance (12) et
des moyens de réglage de tension (92) permettant de régler la tension du fil-électrode (1) en réponse à la tension optimale calculée ci-dessus qui est fournie par les moyens de calcul de tension optimale (93).

# Fig. 1

# Fig. 2

# Fig. 3

# Fig. 4

MEMORY MEANS — 91

OPTIMUM TENSION CALCULATION MEANS — 93

TENSION CONTROL MEANS — 92

MASTER CONTROLLER

TAPER CONTROLLER